# EUROPÄISCHE PATENTSCHRIFT

(11) **EP 2 544 911 B1**
(45) Veröffentlichungstag und Bekanntmachung des Hinweises auf die Patenterteilung: **26.03.2014**
(21) Anmeldenummer: 11707777.6
(22) Anmeldetag: 09.02.2011
(51) Int. Cl.: B60K 15/03, B60K 15/073, B60K 37/06, B29C 45/14

(54) **TANK FÜR BETRIEBSMITTEL VON KRAFTFAHRZEUGEN**
TANK FOR VEHICLE SERVICE LIQUIDS
RÉSERVOIR POUR FLUIDES DE SERVICE DE VÉHICULES AUTOMOBILES

(30) Priorität: 09.03.2010 AT 3712010
(43) Veröffentlichungstag der Anmeldung: 16.01.2013
(73) Patentinhaber: Alutech Gesellschaft m.b.H., 5651 Lend (AT)
(72) Erfinder: FLETCHER, Paul, A-5620 Schwarzach (AT); WASLE, Gregor, A-6600 Reutte (AT)
(74) Vertreter: Weiser, Andreas
(86) Internationale Anmeldenummer: PCT/AT2011/000071
(87) Internationale Veröffentlichungsnummer: WO 2011/109842

(56) Entgegenhaltungen:
- WO-A1-2007/073579
- AT-U1- 10 843
- DE-A1- 10 103 149
- DE-A1-102007 040 416
- GB-A- 1 024 017

## Beschreibung

Die vorliegende Erfindung betrifft einen Tank für Betriebsmittel von Kraftfahrzeugen, mit einem allgemein-zylindrischen Mantel aus Metall, der an zumindest einem Ende durch einen Stirndeckel oder -behälter aus Kunststoff-Spritzguß abgeschlossen ist.

Derartige aus Metall und Kunststoff zusammengesetzte Tanks werden auch als "Hybridtanks" bezeichnet und haben den Vorteil, daß der bzw. die stirnseitige(n) Kunststoffteil(e) durch entsprechende Ausformung optimal an den zur Verfügung stehenden Einbauraum angepaßt werden können. Wenn der Kunststoffteil einen Behälter bildet, können darin auch chemisch aggressive Zusatzstoffe mitgeführt werden, z.B. Harnstoff, Ad-Blue-Lösung od.dgl.

Zum Aufbau solcher Hybridbehälter ist es aus der gattungsbildinder DE 10 2007 040 416 A1 bekannt, den Kunststoffdeckel bzw. -behälter direkt in der Mantelöffnung einzusintern oder darin zu verschrauben. Ersteres verkompliziert die Fertigung beträchtlich, weil dazu bei der Kunststofformung der Mantel bzw. Mantelteil bereits verfügbar sein muß und die äußere Sinterform bildet. Die zweite Variante erfordert das Integrieren von Gewindebuchsen in den Kunststoffteil und eine aufwendige Montage durch Herstellen zahlreicher Verschraubungen.

Die Erfindung setzt sich zum Ziel, die genannten Nachteile des Standes der Technik zu überwinden und einen Hybridtank zu schaffen, welcher einfacher und kostengünstiger gefertigt werden kann als die bekannten Konstruktionen.

Dieses Ziel wird erfindungsgemäß dadurch erreicht, daß in den Stirndeckel oder -behälter ein Metallstreifen auskragend eingespritzt ist, welcher mit dem Mantel verschweißt ist. Dadurch können die Fertigungsschritte für den bzw. die Kunststoff-Stirnteile einerseits und den Metall-Behältermantel anderseits voneinander entkoppelt werden und der Metallstreifen stellt eine einfach zu handhabende Schnittstelle für deren nachträgliche Schweißverbindung dar. An dieser neuen Schnittstelle können unterschiedlichste Stirndeckel und -behälter mit verschiedensten Metallmänteln kombiniert werden, was eine Modularisierung der Fertigung und Bevorratung ermöglicht. Der in den Stirndeckel bzw. -behälter eingespritzte Metallstreifen stellt dabei einen sehr kostengünstigen Teil dar.

Bevorzugt besitzt der Stirndeckel oder -behälter einen etwa axialparallel auskragenden Rand, der sich in dem daraus auskragenden Metallstreifen fortsetzt. Dies erleichtert die Formgestaltung und trägt zur Volumensbildung bei.

Besonders günstig ist es, wenn der Metallstreifen einen Absatz aufweist, auf oder in welchen der Rand des Mantels im wesentlichen bündig schiebbar ist. Dadurch kann der Verbrauch von Einbauraum bzw. Innenvolumen minimiert werden. Der Absatz kann in vorteilhafter Weise auch zur Aufnahme der Schweißverbindung herangezogen werden, indem der Rand des Mantels mit einer am Absatz umlaufenden Schweißnaht mit dem Metallstreifen verschweißt ist.

Der erfindungsgemäße Tank eignet sich für alle Arten von Hybridkonstruktionen aus Kunststoff und Metall und besonders für den Fall, daß Mantel und Metallstreifen aus Aluminium gefertigt sind.

Gemäß einer weiteren Ausführungsform der Erfindung weist der Stirndeckel oder -behälter in an sich bekannter Weise Ausbuchtungen zur komplementären Ausnützung des verfügbaren Einbauraums auf.

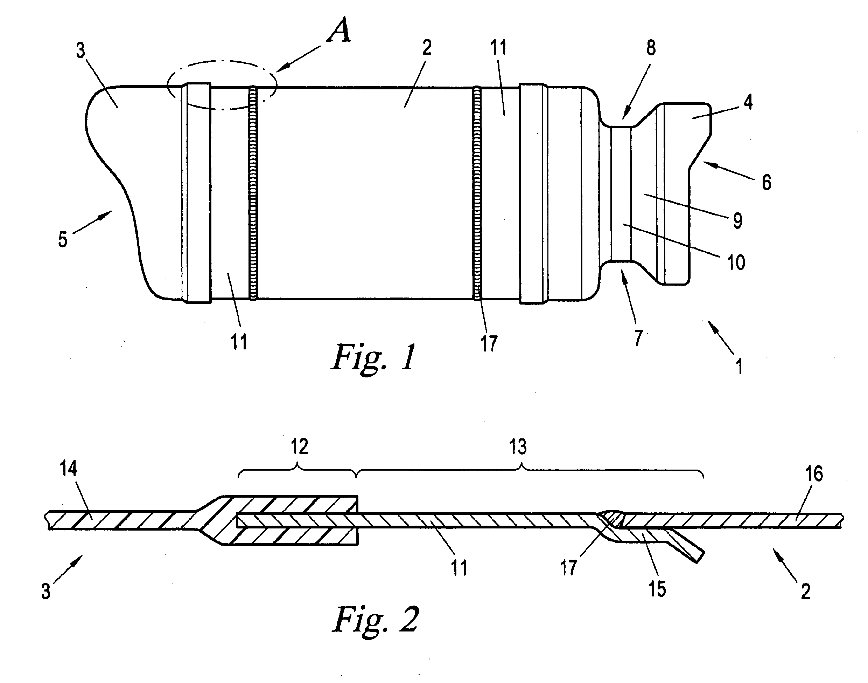

Die Erfindung wird nachstehend anhand eines in den beigeschlossenen Zeichnungen dargestellten Ausführungsbeispiels näher erläutert. In den Zeichnungen zeigt Fig. 1 einen Tank der Erfindung in einer Seitenansicht und Fig. 2 das Detail A von Fig. 1 im Schnitt.

Fig. 1 zeigt einen Tank 1 für Betriebsmittel von Kraft-fahrzeugen, z.B. Kraftstoff, Hydrauliköl, Abgasbehandlungsstoffe usw. Bevorzugt handelt es sich um einen Tank für Dieselkraftstoff eines Lastkraftwagens.

Der Tank 1 hat einen Mantel 2 aus dünnwandigem Metallblech, insbesondere Aluminiumblech, der an seinem einen Ende durch einen Stirndeckel 3 und an seinem anderen Ende durch einen Stirnbehälter 4 abgeschlossen ist. Alternativ könnte der Mantel 2 auch nur einseitig offen sein und dort durch einen Stirndeckel oder -behälter 3, 4 abgeschlossen sein, insbesondere wenn er topfartig durch Tiefziehen aus einem Blech geformt ist. Der Mantel 2 kann aber auch an beiden Enden durch Stirndeckel 3 oder an beiden Enden durch Stirnbehälter 4 abgeschlossen sein.

Die Querschnittsform von Mantel 2 und Stirndeckel bzw. -behälter 3, 4 kann beliebiger Art sein, z.B. rechteckig, quadratisch, abgerundet rechteckig oder abgerundet quadratisch, rund, oval usw. Der Mantel 2 besitzt demgemäß die Form eines allgemeinen Zylinders beliebiger Grundfläche (Querschnittsfläche). Bevorzugt ist der Mantel 2 von rundem Querschnitt, d.h. rohrförmig.

Der Stirndeckel 3 und der Stirnbehälter 4 sind Kunststoff-Spritzgußteile, welche beim Spritzgießen so ausgeformt werden, daß sie den an den Behälterenden zur Verfügung stehenden Bauraum am Fahrzeug optimal ausnützen, wie an den Einbuchtungen 5 - 8 gezeigt ist.

Der Stirnbehälter 4 bildet in seinem Inneren eine Kammer 9 zur Aufnahme des genannten Betriebsmittels oder eines weiteren Betriebsmittels des Kraftfahrzeuges, beispielsweise eines Zweitkraftstoffs, Harnstoffs oder einer AdBlue-Lösung. Eine die Kammer 9 abschließende Trennwand 10 im Inneren des Stirnbehälters 4 kann sowohl als Trennwand zur Abtrennung der Kammer 4 oder als durchbrochene Wand (Schwallwand) gegenüber dem Inneren des Mantels 2 ausgebildet sein.

Die Verbindung der Kunststoffteile Stirndeckel 3 und Stirnbehälter 4 mit dem Metallmantel 2 ist in Fig. 2 für den Stirndeckel 3 gezeigt; dieselbe Konstruktion findet beim Stirnbehälter 4 spiegelverkehrt Anwendung. In den Stirndeckel 3 bzw. -behälter 4 wird während der Spritzgußfertigung ein Metallstreifen 11 miteingespritzt, und zwar so, daß er teilweise eingebettet ist (Bereich 12) und teilweise auskragt (Bereich 13). Dazu kann bevorzugt der Stirndeckel bzw. -behälter 3, 4 einen etwa axialparallel auskragenden Rand 14 aufweisen, aus dem der Metallstreifen 11 wiederum etwa axialparallel auskragt.

Der Metallstreifen 11, genauer sein auskragender Bereich 13, dient zur Schweißverbindung mit dem Metallmantel 2. Zu diesem Zweck umfaßt der Metallstreifen 11 bevorzugt einen Absatz 15, auf den das Ende 16 des Mantels 2 etwa bündig aufschiebbar ist; alternativ könnte der Absatz 15 auch radial nach außen gehen und das Ende 16 in den Absatz 15 einschiebbar sein. Bevorzugt an dieser Stelle wird das Ende 16 des Mantels 2 mit dem Metallstreifen 11 mittels einer umlaufenden Schweißnaht 17 verschweißt, u.zw. so, daß die Schweißnaht 17 vom Absatz 15 etwa bündig aufgenommen ist.

In einer vereinfachten Ausführungsform kann der Absatz 15 entfallen und der Metallstreifen 11 auf andere Weise mit dem Metallmantel 2 verschweißt werden, z.B. stumpfverschweißt oder außen oder innen umlaufend verschweißt, wenn die beiden Teile ineinandergesteckt werden.

Der beim Spritzgußformen des Stirndeckels bzw. -behälters 3, 4 eingebettete Bereich 12 des Metallstreifens 11 kann zusätzlich mit Rippen, Noppen, Durchbrechungen usw. zur besseren Verankerung im Kunststoffmaterial ausgestattet werden.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Tank (1) für Betriebsmittel von Kraftfahrzeugen, mit einem allgemein-zylindrischen Mantel (2) aus Metall, der an zumindest einem Ende durch einen Stirndeckel (3) oder -behälter (4) aus Kunststoff-Spritzguß abgeschlossen ist, **dadurch gekennzeichnet, daß** in den Stirndeckel oder -behälter (3, 4) ein Metallstreifen (11) auskragend eingespritzt ist, welcher mit dem Mantel (2) verschweißt ist.

2. Tank nach Anspruch 1, **dadurch gekennzeichnet, daß** der Stirndeckel oder -behälter (3, 4) einen etwa axialparallel auskragenden Rand (14) besitzt, der sich in dem daraus auskragenden Metallstreifen (11) fortsetzt.

3. Tank nach Anspruch 1 oder 2, **dadurch gekennzeichnet, daß** der Metallstreifen (11) einen Absatz (15) aufweist, auf oder in welchen der Rand (16) des Mantels (2) im wesentlichen bündig schiebbar ist.

4. Tank nach Anspruch 3, **dadurch gekennzeichnet, daß** der Rand (16) des Mantels (2) mit einer am Absatz (15) umlaufenden Schweißnaht (17) mit dem Metallstreifen (11) verschweißt ist.

5. Tank nach einem der Ansprüche 1 bis 4, **dadurch gekennzeichnet, daß** der Mantel (2) und der Metallstreifen (11) aus Aluminium gefertigt sind.

6. Tank nach einem der Ansprüche 1 bis 5, **dadurch gekennzeichnet, daß** der Stirndeckel oder -behälter (3, 4) in an sich bekannter Weise Ausbuchtungen (5 - 8) zur komplementären Ausnützung des verfügbaren Einbauraums aufweist.

## Claims

1. Tank (1) for operating materials of motor vehicles, with a generally cylindrical mantle (2) made out of metal, which is sealed-off on at least one end by a front cover (3) or front container (4) made out of plastic by injection moulding, **characterized in that** a metal strip (11) is moulded projectingly into the front cover or container (3, 4), which metal strip (11) is welded to the mantle (2).

2. Tank according to claim 1, **characterized in that** the front cover or container (3, 4) has a rim (14) projecting approximately parallel to the axis, which rim (14) is extended by the metal strip (11) projecting out of it.

3. Tank according to claim 1 or 2, **characterized in that** the metal strip (11) comprises a ledge (15) onto or into which the rim (16) of the mantle (2) can be slid with substantially flush fit.

4. Tank according to claim 3, **characterized in that** the rim (16) of the mantle (2) is welded to the metal strip (11) by a circumferential weld seam (17) on the ledge (15).

5. Tank according to any one of the claims 1 to 4, **characterized in that** the mantle (2) and the metal strip (11) are made out of aluminium.

6. Tank according to any one of the claims 1 to 5, **characterized in that** the front cover or container (3, 4) has, in a manner known per se, bulges (5 - 8) for complementary utilization of the installation space available.

## Revendications

1. Réservoir (1) pour carburant de véhicules automobiles, avec une enveloppe (2) métallique, généralement cylindrique, laquelle est fermée à au moins une extrémité par un couvercle frontal (3) ou un récipient frontal (4) en plastique moulé par injection, **caractérisé en ce qu'**une bande métallique (11) est injectée dans le couvercle ou récipient frontal (3, 4), de manière à faire saillie, tout en étant soudée avec l'enveloppe (2).

2. Réservoir selon la revendication 1, **caractérisé en ce que** le couvercle ou récipient frontal (3, 4) possède un bord (14) faisant saillie quasiment parallèlement à l'axe, lequel se prolonge dans la bande métallique (11) faisant saillie sur celui-ci.

3. Réservoir selon la revendication 1 ou 2, **caractérisé en ce que** la bande métallique (11) comporte un gradin (15), sur lequel ou dans lequel le bord (16) de l'enveloppe (2) peut être inséré essentiellement en affleurement.

4. Réservoir selon la revendication 3, **caractérisé en ce que** le bord (16) de l'enveloppe (2) est soudé avec la bande métallique (11) par une soudure (17) périphérique sur le gradin (15).

5. Réservoir selon l'une des revendications 1 à 4, **caractérisé en ce que** l'enveloppe (2) et la bande métallique (11) sont constituées d'aluminium.

6. Réservoir selon l'une des revendications 1 à 5, **caractérisé en ce que** le couvercle ou récipient frontal (3, 4) comporte des échancrures (5-8) pour l'exploitation complémentaire de l'espace de montage disponible, de manière connue en soi.
